# NEUE EUROPÄISCHE PATENTSCHRIFT

(11) **EP 0 213 460 B2**
(45) Veröffentlichungstag und Bekanntmachung des Hinweises auf die Entscheidung über den Einspruch: **10.03.1993**
(45) Hinweis auf die Patenterteilung: 03.05.1989
(21) Anmeldenummer: 86111040.1
(22) Anmeldetag: 09.08.1986
(51) Int. Cl.: B02C 18/14, B02C 18/16

(54) **Kutterschüssel**
Cutter bowl
Cuvette pour cutter

(30) Priorität: 16.08.1985 DE 8523614 U
(43) Veröffentlichungstag der Anmeldung: 11.03.1987
(73) Patentinhaber: Krämer + Grebe GmbH & Co. KG Maschinenfabrik, 35216 Biedenkopf-Wallau (DE)
(72) Erfinder: Norbisrath, Max, D-3565 Breidenbach (DE)
(74) Vertreter: Missling, Arne, Dipl.-Ing.

(56) Entgegenhaltungen:
- EP-A- 0 041 038
- DE-A- 2 028 889
- DE-A- 3 030 914
- Römpps Chemie Lexikon, 8. Auflage, Seite 3296
- Prospekt "Plexilith" der Firma Röhm GmbH
- "Fertigteile Beton Werkstein", Sonderdruck Heft 1 und 2/1978, Verlagsgesellschaft Rudolf Müller GmbH & Co, Köln
- Prospekt "ACO Kundenguss" von 1984
- Prospekt "ACO Kundenguss Form und Zeichnungsteile aus Polymerbeton" von Jan. 1985
- Prospekt "ACO FARM Stallbauelemente" von Jan. 1985

## Beschreibung

Die Erfindung betrifft eine im Gußverfahren hergestellte Kutterschüssel, für Kutter zum Schneiden und Mischen von Lebensmitteln, z.B. für die Wurstherstellung.

Kutter zum Schneiden und Mischen von Lebensmitteln, die vorzugsweise für die Wurstherstellung eingesetzt werden, haben eine ringmuldenförmige, um ihre senkrechte Symmetrieachse waagerecht drehbar angetriebene Kutterschüssel, die das Schneidgut aufnimmt. Derartige Kutter sind z.B. aus der EP-A-0 041 038 bekannt.

Auf einer waagerecht über der Kutterschüssel angeordneten Messerwelle sind am über der Kutterschüssel befindlichen Ende Messer angeordnet, die mit ihren Schneidspitzen dicht an der ringmuldenförmigen Innenfläche der Kutterschüssel arbeiten. Dies ist eine Voraussetzung für eine Fein- bzw. Feinstzerkleinerung des Schneidgutes. Die Innenflächen der Kutterschüsseln müssen also sehr sorgfältig bearbeitet werden.

Es ist bekannt, derartige Kutterschüsseln aus Grauguß herzustellen, wobei die Bearbeitung sehr kostenaufwendig ist, da diese Kutterschüsseln gegossen und anschließend spanend bearbeitet werden müssen. Die Materialkosten wie auch die Arbeitszeitkosten für das Gießen und anschließende Bearbeiten der Kutterschüsseln sind relativ hoch. Derartige Kutterschüsseln aus Grauguß zeigen den Nachteil, daß diese rosten und Graphitstaub absondern, was sie insbesondere für die Verwendung für die Bearbeitung von Lebensmitteln als unbefriedigend erscheinen läßt. In einigen Ländern sind Kutterschüsseln aus Grauguß nicht mehr zugelassen. Es müssen dann Kutterschüsseln aus rostfreiem Edelstahl eingesetzt werden, die zwar in hygienischer Hinsicht einwandfrei sind, die jedoch sehr teuer sind, da diese aus einem sehr teuren Rohstoff bestehen und aufwendig bearbeitet werden müssen.

Kutterschüsseln aus Grauguß oder aus Stahl zeigen gemeinsam den Nachteil, daß diese nureine sehr geringe Schwingungs- und Geräuschdämpfung, jedoch ein hohes spezifisches Gewicht und eine hohe Wärmeleitfähigkeit haben.

Der Erfindung liegt die Aufgabe zugrunde, eine Kutterschüssel der eingangs genannten Art so auszubilden, daß diese zum einen korrosionsbeständig ist, mit verhältnismäßig geringen Fertigungskosten herstellbar ist und in einem Arbeitsgang ohne Nachbearbeitung der Oberflächen fertiggestellt werden kann, die zu den bekannten Kutterschüsseln vergleichsweise leicht ist, eine hohe Schwingungs- und Geräuschdämpfung wie eine geringe Wärmeleitfähigkeit aufweist.

Diese Aufgabe wird mit den Merkmalen des kennzeichnenden Teils des Anspruches 1 gelöst.

Gemäß der Erfindung besteht eine erfindungsgemäße Kutterschüssel aus einem Reaktionsharzbeton-Guß. Ein derartiger Reaktionsharzbeton-Guß hat ein Bindemittel, z.B. ein Epoxid-, ein Polyester- oder ein Methacrylatharz, dem als inerter Füllstoff z.B. Quarzitgranulat zugesetzt wird, wobei hier eine Abstufung der Korngrösse der Zusatzstoffe entsprechend den herkömmlichen Betonen gewählt werden kann.

Eine erfindungsgemäße Kutterschüssel ist also mitwesentlich einfacheren Mitteln und Gerätschaften herzustellen als die herkömmlichen Kutterschüsseln aus Grauguß oder aus rostfreiem Stahl, da hierfür keine aufwendigen Gießanalgen erforderlich sind. Erforderlich ist allein eine Gießform, in die der Reaktionsharzbeton eingegossen und abgebunden wird. Die erhaltenen Oberflächen des Kutters sind so glatt ausgebildet, daß diese den hohen Anforderungen genügen, die für ein nahes Arbeiten der Messer an der Kutterschüsselinnenwandung bestehen. Beim Guß werden vorteilhaft gleichzeitig die Auflagerflächen für den Antrieb sowie Buchsen für die Entwässerung sowie für die Aufnahme der Befestigungsschrauben mit eingegossen, so daß diese Teile, die dem Verschleiß ausgesetzt sind, entsprechend geschützt sind.

Eine Kutterschüssel aus Reaktionsharzbeton ist des weiteren wesentlich leichter herzustellen als eine solche aus Grauguß bzw. aus Edelstahl, da die Dichte der Kutterschüssel aus Reaktionsharzbeton bei etwa 2,3 g/cm³ liegt, während diejenige aus Grauguß bzw. Edelstahl bei ca. 7,8 g/cm³liegt. darüberhinaus ist im Gegensatz zu der Grauguß-Kutterschüssel die Betonschüssel gleichermaßen korrosionsbeständig wie auch toxologisch unbedenklich, wie die Kutterschüssel aus Edelstahl. Da jedoch das Herstellungsverfahren wesentlich einfacher ist und nachträgliche zerspanende Bearbeitungen der Kutterschüssel entfallen, kann die erfindungsgemäße Kutterschüssel aus Reaktionsharzbeton wesentlich preisgünstiger hergestellt werden. Daneben besitzt die Kutterschüssel aus Reaktionsharzbeton ein wesentlich besseres Schwingungs- und Lärmdämpfungsverhalten, was etwa 6,5 mal besser als Grauguß und bis zu 12 mal besser als Stahlguß ist.

Darüberhinaus zeigt eine Kutterschüssel aus Reaktionsharzbeton den Vorteil, daß der Reaktionsharz eingefärbt werden kann, so daß den Kutterschüsseln bereits beim Guß das endgültige Aussehen gegeben werden kann und der bei Grauguß erforderliche Au- ßenanstrich entfallen kann. Als besonders vorteilhaft hat sich ein Reaktionsharzbeton herausgestellt, der 8% Epoxidharz und 92% inerte Zuschlagstoffe aufweist. Ein derartiger Kunststoffbeton ist in lebensmittelrechtlicher Hinsicht unbedenklich, er ist korrosionsbeständig und leicht zu verarbeiten. Die Festigkeit, insbesondere gegen Schlagbeanspruchung der Kutterschüssel, kann auch noch durch eine in die Wandung der Kutterschüssel eingelegte Armierung erhöht werden, wobei hier Armierungen aus Metall sowie aus Glas- und Kohlenstoffasern infrage kommen.

Weitere vorteilhafte Ausgestaltungen der Erfindung gehen aus den Ansprüchen in Verbindung mit Beschreibung und Zeichnung hervor.

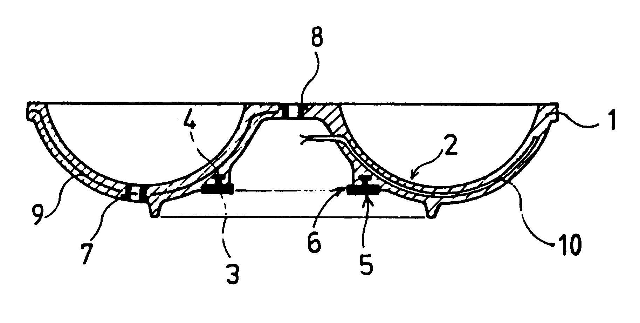

Ein Ausführungsbeispiel der Erfindung ist im folgenden anhand der Zeichnung näher beschrieben, die eine erfindungsgemäße Kutterschüssel im Schnitt zeigt.

Die ringmuldenförmig ausgebildete Kutterschüssel 1 besteht aus einem Reaktionsharzbeton und ist im Gußverfahren hergestellt. Die Maßhaltigkeit beim Gießverfahren ist so groß, daß die gesamte Kutterschüssel, wie auch deren Innenfläche 2, nicht nachbearbeitet zu werden braucht, sondern unmittelbar in den Kutter eingebaut werden kann.

Vorteilhaft ist es, den Innenflächen der Kutterschüssel eine bestimmte Feinstruktur, z.B. eine Riffelung zu geben, um eine stetige und sichere Mitnahme des Schneidgutes in der umlaufenden Kutterschüssel zu erhalten. Auch diese Strukturierung der Oberfläche kann unmittelbar mit dem Guß erhalten werden, wohingegen eine derartige Stukturierung bei herkömmlichen Guß-Kutterschüsseln erst nachträglich durch spanende oder schleifende Bearbeitung eingebracht werden muß.

An der Unterseite der Kutterschüssel 1 ist in die Wandung der Kutterschüssel 1 ein Flanschring 3 mit eingegossen, der ein Ankerteil 4 besitzt, das T-förmig ausgebildet ist. Es ist jedoch auch denkbar, als Anker 4 ein schraubenförmiges Teil zu verwenden. Hierdurch ist ein sicherer Halt des Flanschringes 3 in der Kutterschüssel 1 gewährleistet. Die Fläche 5 des Flanschringes 3 liegt genau senkrecht und die Innenfläche 6 des Flanschringes 3 genau parallel und konzentrisch zur Achsmitte der Kutterschüssel 1. Hierdurch ist eine einfache und exakte Befestigung an den Mitnahmeeinrichtungen für die Kutterschüssel möglich.

In die Kuttertschüssel sind des weiteren zwei Ringbuchsen 7, 8 eingesetzt, wobei die eine Ringbuchse 7 mit einem Innengewinde versehen ist, so daß in diese ein Stopfen eingeschraubt werden kann. Die Ringbuchse 7 ist im Bereich der tiefsten Stelle der Kutterschüssel 1 angeordnet und dient dazu, Restflüssigkeit aus dem Kutter ablassen zu können. Die Ringbuchse 8 dient zur Verstärkung der Aufnahmestelle, durch die die Befestigungsschraube durch die Kutterschüssel 1 greift.

In die linke Hälfte der Kutterschüssel 1 ist eine Bewehrung 9 eingezeichnet, die in bekannter Art und Weise ausgebildet sein kann und aus Metall, Glas-oder Kunststoffasern bestehen kann. Durch diese Armierung wird die Festigkeit der Kutterschüssel weiter erhöht.

In den rechten Teil der Kutterschüssel in der Figur ist eine Heizeinrichtung eingelegt, die im Ausführungsbeispiel aus elektrischen Widerstandsdrähten besteht und die zur Aufheizung der Kutterschüssel dient.

Eine erfindungsgemäße Kutterschüssel hat die gleichen vorteilhaften Eigenschaften in lebensmittelrechtlicher Hinsicht wie eine Kutterschüssel aus Edelstahl, sie ist jedoch wesentlich kostengünstiger herzustellen und zeigt gegenüber der Kutterschüssel aus Edelstahl darüberhinaus den Vorteil der geringeren Wärmeleitfähigkeit wie der höheren Schwingungs- und Geräuschdämpfung und nicht zuletzt des geringeren Gewichtes.

## Patentansprüche

1. Im Gießverfahren hergestellte Kutterschüssel für Kutter zum Schneiden und Mischen von Lebensmitteln, z.B. für die Wurstherstellung, dadurch gekennzeichnet, daß die Kutterschüssel (1) aus Reaktionsharzbeton besteht und daß in die Wandung der Kutterschüssel (1) ein Metall-Flanschring (3) eingegossen ist, wobei die Flanschfläche (5) des Flanschringes (3) senkrecht und die Innenfläche (6) parallel und konzentrisch zur Achsmitte der Kutterschüssel verläuft.

2. Kutterschüssel nach Anspruch 1, dadurch gekennzeichnet, daß der Reaktionsharzbeton als Bindermittel Polyester-, Methacryl- oder Epoxydharz und als inerte Füllstoffe Quarzitgranulat aufweist.

3. Kutterschüssel nach Anspruch 2, dadurch gekennzeichnet, daß 4-15 Gewichtsprozent Bindemittel und 96-85 Gewichtsprozent Zuschlagstoffe im Reaktionsharzbeton enthalten sind.

4. Kutterschüssel nach Anspruch 2 oder 3, dadurch gekennzeichnet, daß der Reaktionsharzbeton 8 Gewichtsprozent Epoxidharz und 92 Gewichtsprozent Zuschlagstoffe aufweist.

5. Kutterschüssel nach Anspruch 1, dadurch gekennzeichnet, daß der Flanschring (3) einen Anker in Form eines T (4) oder einer Schraube hat.

6. Kutterschüssel nach einem der Ansprüche 1 bis 5, dadurch gekennzeichnet, daß in die Wandung der Kutterschüssel eine Flanschbuchse (7) miteinem Innengewinde eingegossen ist.

7. Kutterschüssel nach einem der Ansprüche 1 bis 6, dadurch gekennzeichnet, daß eine Öffnung für Befestigungsmittel mit einer Flanschbuchse (8) ausgekleidet ist.

8. Kutterschüssel nach einem der Ansprüche 1 bis 7, dadurch gekennzeichnet, daß in den Reaktionsharzbeton eine Armierung (9) eingelegt ist.

9. Kutterschüssel nach Anspruch 8, dadurch gekennzeichnet, daß die Armierung (9) aus Glas-und/oder Kohlenstoffasern besteht.

10. Kutterschüssel nach Anspruch 8, dadurch gekennzeichnet, daß die Armierung (9) aus Metallstäben und/oder -geweben besteht.

11. Kutterschüssel nach einem der Ansprüche 1 bis 10, dadurch gekennzeichnet, daß in die Wandung der Kutterschüssel (1) Heizelemente (10) eingebettet sind.

12. Kutterschüssel nach einem der Ansprüche 1 bis 11, dadurch gekennzeichnet, daß die Innenfläche (2) der Kutterschüssel (1) strukturiert ist.

## Claims

1. Cutter bowl, manufactured in the casting process for cutters forthe cutting and mixing of foodstuffs, e.g. for sausage manufacture, characterised in that the cutter bowl (1) consists of reaction resin concrete and that a metal flanged ring (3) is cast into the wall of the cutter bowl (1), whereby the flanged surface (5) of the flanged ring (3) extends vertically, and the inner surface (6) extends parallel and concentrically to the axis centre of the cutter bowl.

2. Cutter bowl according to claim 1, characterised in that the reaction resin concrete has for its binding agents polyester resin, methacrylic resin, or epoxy resin, and has quartzite granulate as inert filling materials.

3. Cutter bowl according to claim 2, characterised in that 4 - 15 per cent by weight of binding agents and 96 85 per cent by weight of aggregates are contained in the reaction resin concrete.

4. Cutter bowl according to claim 2 or 3, characterised in that the reaction resin concrete has 8 per cent by weight of epoxy resin and 92 per cent by weight of aggregates.

5. Cutter bowl according to claim 1, characterised in that the flanged ring (3) has an armature which is T-shaped (4) or which is in the form of a screw.

6. Cutter bowl according to one of the claims 1 to 5, characterised in that a flanged bush (7), with an interior screwthread, is cast into the wall of the cutter bowl.

7. Cutter bowl according to one of the claims 1 to 6, characterised in that an opening for the securing means is lined with a flanged bush (8).

8. Cutter bowl according to one of the claims 1 to 7, characterised in that a reinforcement means (9) is inlaid into the reaction resin concrete.

9. Cutter bowl according to claim 8, characterised in that the reinforcement means (9) consists of glass fibres and/or of carbon fibres.

10. Cutter bowl according to claim 8, characterised in that the reinforcement means (9) consists of metal rods and/or metal gauzes.

11. Cutter bowl according to one of the claims 1 to 10, characterised in that heating elements (10) are embedded into the wall of the cutter bowl (1).

12. Cutter bowl according to one of the claims 1 to 11, characterised in that the inner surface (2) of the cutter bowl (1) is structured.

## Revendications

1. Cuvette pour hachoir obtenu par moulage pour hachoir destiné à couper et mélanger des denrées alimentaires, par exemple pour la fabrication de saucisse, caractérisée en ce que la cuvette (1) est fabriquée en béton de résine synthétique et qu'une bride métallique (3) est fixée au moulage dans la paroi de la cuvette, à quoi la surface (5) de la bride (3) est perpendiculaire à l'axe de la cuvette, et sa surface intérieure (6) est parallèle et concentrique à cet axe.

2. Cuvette selon la revendication 1, charactérisée en ce que le béton de résine composite comprend, comme liant, une résine de polyester ou de méthacrylate ou une résine époxy, et, comme matière de corps inerte, un granulat de quartzite.

3. Cuvette selon la revendication 2, caractérisée en ce que le béton de résine contient 4 à 15 % en poids de liant et 96 à 85 % en poids de matière broyée.

4. Cuvette selon la revendication 2 ou 3, caractérisée en ce que le béton de résine contient 8 % en poids de résine époxy et 92 % de matière broyée.

5. Cuvette selon la revendication 1, caractérisée en ce que la bride métallique (3) est pourvue d'un ancrage en forme de T (4) ou de vis.

6. Cuvette selon l'une des revendications 1 à 5, caractérisée en ce qu'une douille à bride (7), filetée intérieurement, est fixée au moulage dans la paroi de la cuvette.

7. Cuvette selon l'une des revendications 1 à 6, caractérisée en ce qu'une ouverture pour un moyen de fixation est revêtu avec une douille à bride (8).

8. Cuvette selon l'une des revendications 1 à 7, caractérisée en ce que le béton de résine contient une armature.

9. Cuvette selon la revendication 8, caractérisée en ce que l'armature est en fibres de verre et/ou de carbone.

10. Cuvette selon la revendication 8, caractérisée en ce que l'armature est formée de tiges et/ou de tissus métalliques.

11. Cuvette selon l'une des revendications 1 à 10, caractérisée en ce que des éléments chauffants (10) sont noyés dans la paroi de la cuvette.

12. Cuvette selon l'une des revendications 1 à 11, caractérisée en ce que la surface intérieure (2) de la cuvette est texturée.
